# EUROPÄISCHE PATENTSCHRIFT

(11) **EP 1 972 130 B1**
(45) Veröffentlichungstag und Bekanntmachung des Hinweises auf die Patenterteilung: **20.06.2018**
(21) Anmeldenummer: 07702618.5
(22) Anmeldetag: 08.01.2007
(51) Int. Cl.: H04N 1/40

(54) **ELEKTRONISCHE SEHHILFE UND ELEKTRONISCHES SEHHILFEVERFAHREN**
ELECTRONIC VISION AID AND ELECTRONIC VISION AID METHOD
AIDE VISUELLE ELECTRONIQUE ET PROCEDE D'ASSISTANCE VISUELLE ELECTRONIQUE

(30) Priorität: 09.01.2006 DE 102006001075
(43) Veröffentlichungstag der Anmeldung: 24.09.2008
(73) Patentinhaber: Carl Zeiss AG, 73447 Oberkochen (DE)
(72) Erfinder: SPRUCK, Bernd, 73563 Mögglingen (DE)
(74) Vertreter: Patentanwälte Geyer, Fehners & Partner mbB
(86) Internationale Anmeldenummer: PCT/EP2007/000097
(87) Internationale Veröffentlichungsnummer: WO 2007/080082

(56) Entgegenhaltungen:
- DE-U1- 20 113 278
- US-A- 5 267 331
- US-A1- 2004 136 570
- PELI E.: "Simple 1-D image enhancement for head-mounted low vision aid" VISUAL IMPAIRMENT RESEARCH, April 1999 (1999-04), Seiten 3-10, XP008079116

## Beschreibung

Die Erfindung betrifft eine elektronische Sehhilfe mit den Merkmalen des Oberbegriffs des Anspruches 1 und eine elektronisches Sehhilfeverfahren mit den Merkmalen des Oberbegriffs des Anspruches 7.

Als einfachstes bekanntes Hilfsmittel für Sehbehinderte sind Vergrößerungslupen (auch elektronische) bekannt, die den zu lesenden Text (= Information, die sichtbar abhebend auf einem Informationsträger, z. B. Papier, dargestellt ist) so stark vergrößern, daß Sehbehinderte den Text lesen können. Diese Vergrößerungslupen können beispielsweise eine auf den zu lesenden Text aufsetzbare Kamera und eine daran angeschlossene HMD-Vorrichtung (Head Mounted Display-Vorrichtung) aufweisen. Neben der Vergrößerung sind auch Falschfarbendarstellungen bekannt. Ferner ist es möglich, statt der auf den Text aufsetzbaren Kamera eine Kopfkamera, die an der HMD-Vorrichtung selbst befestigt ist, vorzusehen. Eine solche Vorrichtung ist beispielsweise in der DE 202 09 101 U1 beschrieben.

Die DE 201 13 278 U1 beschreibt eine elektronische Sehhilfe, bei der die Sehformation in Größe, Farbe, Form, Kontrast, Umfang, Zeilenlänge, Zeilenanzahl, Zeilentransport aufbereitet und z. B. über ein Projektor dargestellt wird. Dies wird so durchgeführt, daß der Betrachter eine gesamte Zeile des Sehobjekts in ausreichender Form, Farbe und Größe wahrnehmen kann.

In der Praxis zeigt sich jedoch, daß z. B. die Schriftfarbe, die Farbe des Hintergrundes sowie die Reflektivität des Hintergrundes und auch der Schrift selbst bei der Aufnahme sehr stark variieren können. Ein weiter Einflußfaktor ist beispielsweise die Beleuchtung des zu lesenden Textes. Eine einzige Einstellung einer Sehhilfe, die für alle Variationen der Einflußfaktoren optimal ist, ist nicht möglich.

Aus dem Artikel "Simple 1-D image enhancement for head-mounted low vision aid" von Eli Peli, Visual Impairment Research, April 1999, Seiten 3 - 10, ist eine elektronische Sehhilfe der eingangs genannten Art und ein elektronisches Sehhilfeverfahren der eingangs genannten Art bekannt. Die US 2004/136570 A1 beschreibt ein Verfahren und eine Vorrichtung zur Verbesserung der Darstellung eines Bildes, damit es von Sehbehinderten besser erfasst werden kann.

Ausgehend hiervon ist es Aufgabe der vorliegenden Erfindung, eine elektronische Sehhilfe sowie ein elektronisches Sehhilfeverfahren der eingangs genannten Art so zu verbessern, dass eine bezüglich des Kontrastes optimierte Darstellung einer sich sichtbar vom Hintergrund abhebenden Information unabhängig von den Aufnahmebedingungen möglich ist.

Die Erfindung ist in den unabhängigen Ansprüchen 1 und 7 definiert. Weiterbildungen sind in den abhängigen Ansprüchen angegeben.

Durch die Ermittlung des Helligkeitsschwellwertes kann für das Binärbild der optimale Schwellwert festgelegt werden, so daß auch bei unterschiedlichen Aufnahmebedingungen jeweils der optimale Helligkeitsschwellwert benutzt wird, um das gewünschte Binärbild mit möglichst hohem Kontrast zu erzeugen.

Mit der HMD-Vorrichtung (HMD-Vorrichtung = eine auf dem Kopf des Benutzers tragbare bzw. befestigbare Anzeigevorrichtung) kann dem Benutzer das Binärbild in ausgezeichneter Qualität (als virtuelles Bild) dargeboten werden.

Die Auswerteeinheit kann die Helligkeitsverteilung in Form eines Histogramms ermitteln und das Histogramm vor der Ableitung des Schwellwertes einer Tiefpaßfilterung unterziehen. Durch die Tiefpaßfilterung werden unerwünschte hochfrequente Schwankungen im Histogramm herausgefiltert. Die Erstellung des Histogramms ist leicht und schnell möglich.

Insbesondere kann die Auswerteinheit den Schwellwert anhand des Steigungsverlaufs der Helligkeitsverteilung ermitteln. So konnte festgestellt werden, daß der Helligkeitsverlauf in seiner grundsätzlichen Form unabhängig von den Aufnahmebedingungen im wesentlich immer treppenförmig ist. Die Treppenstufe mit der geringeren Häufigkeit der Helligkeitswerte ist in der Regel dem Text zuzuordnen, wohingegen die Treppenstufe mit der höheren Häufigkeit in der Regel dem Hintergrund zuzuordnen ist. Lediglich der Übergangsbereich zwischen diesen beiden Stufen verschiebt sich in Abhängigkeit der tatsächlichen Ausleuchtung zu höheren oder geringeren Helligkeitswerten. Die Steigung des Übergangsbereichs bleibt im wesentlichen gleich, so daß anhand des Steigungsverlaufes sehr gut der tatsächliche Übergang zwischen der Helligkeit für den Text und der Helligkeit für den Hintergrund ermittelt werden kann.

Bevorzugt wird die Helligkeitsverteilung noch normiert, bevor der Helligkeitsschwellwert abgeleitet wird. Damit werden sehr gut vergleichbare Steigungswerte erzielt.

Die elektronische Sehhilfe kann ferner einer Aufnahmeeinheit zum Erzeugen der Aufnahme aufweisen. Dabei kann es sich um herkömmliche CCD-, CMOS-Kameras oder sonstige Videokameras handeln. Die Kamera kann über eine eingebaute LED Beleuchtung verfügen, so daß die Beleuchtung des Textes bzw. der Information z. B. möglichst konstant gehalten werden kann.

Insbesondere können der elektronischen Sehhilfe laufend neue Aufnahmen zugeführt werden, wobei die Auswerteeinheit für eine vorbestimmte Anzahl von aufeinanderfolgenden Aufnahmen nur von einer der Aufnahmen den Helligkeitsschwellwert ableitet und die Bildverarbeitungseinheit den so abgeleiteten Helligkeitsschwellwert so lange für die Erzeugung der Binärbilder einsetzt, bis die Auswerteeinheit einen neuen Schwellwert ermittelt und zur Bildverarbeitungseinheit übertragen hat. Damit kann die benötigte Rechenleistung der Auswerteeinheit verringert werden. Dies ist insbesondere im Hinblick auf Echtzeitanwendungen vorteilhaft.

Mit dem Verfahren gemäß Anspruch 7 können kontrastoptimierte Binärbilder unabhängig von den Aufnahmebedingungen erzeugt werden und mittels der HMD-Vorrichtung kann das Binärbild in ausgezeichneter Qualität dem Benutzer dargeboten werden.

Die Helligkeitsverteilung kann in Form eines Histogramms ermittelt werden und das Histogramm kann vor der Ableitung des Schwellwertes einer Tiefpaßfilterung unterzogen werden. Durch die Tiefpaßfilterung können unerwünschte hochfrequente Schwankungen im Histogramm herausgefiltert werden. Die Erzeugung des Histogramms ist heutzutage schnell und einfach möglich, so daß das Verfahren insgesamt schnell durchführbar ist.

Der Helligkeitsschwellwert kann anhand des Steigungsverlaufs der Helligkeitsverteilung ermittelt werden. Insbesondere wird vor der Ermittlung des Helligkeitsschwellwertes die Helligkeitsverteilung normiert. Damit kann in einfacher Art und Weise sicher der optimale Helligkeitsschwellwert ermittelt werden.

Mit dem erfindungsgemäßen Verfahren können aus laufend zugeführten Aufnahmen laufend die entsprechenden Binärbilder erzeugt werden, wobei der Helligkeitsschwellwert bevorzugt immer für eine vorbestimmte Anzahl von Aufnahme anhand einer der Aufnahmen ermittelt wird.

Die Erfindung wird nachfolgend beispielshalber anhand der beigefügten Zeichnungen noch näher erläutert. Es zeigen:
- Fig. 1: eine schematische Darstellung einer Ausführungsform der erfindungsgemäßen elektronischen Sehhilfe;
- Fig. 2: eine schematische Darstellung der Helligkeitsverteilung einer Aufnahme, und
- Fig. 3: eine schematische Darstellung einer weiteren Ausführungsform der erfindungsgemäßen Sehhilfe.

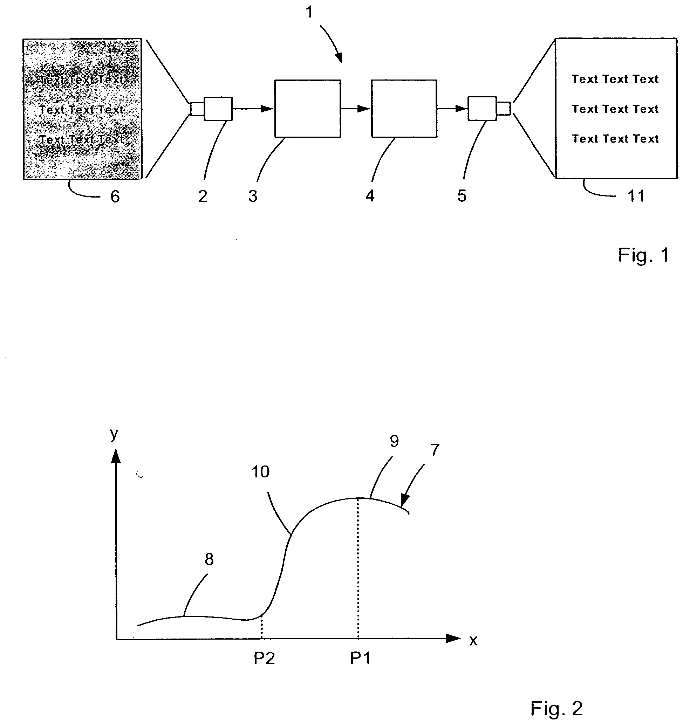

Bei der in Fig. 1 schematisch gezeigten Ausführungsform umfaßt die elektronische Sehhilfe 1 eine Aufnahmeeinheit 2, eine Auswerteeinheit 3, eine Bildverarbeitungseinheit 4 sowie eine Anzeigeeinheit 5.

Die Aufnahmeeinheit 2 nimmt ein Blatt Papier 6 (Informationsträger) auf, auf dem ein zu lesender Text (Information) aufgedruckt ist. Der Text hebt sich zwar sichtbar vom Hintergrund ab. Wie jedoch in Fig. 1 schematisch dargestellt ist, ist das Blatt Papier nicht weiß, sondern hellgrau, so daß der Kontrast zwischen dem Text und dem Hintergrund relativ gering ist, wodurch es für Sehbehinderte sehr schwer ist, den Text zu lesen.

Die mittels der Aufnahmeeinheit 2 erzeugte Aufnahme des Textes auf dem Blatt Papier 6 wird der Auswerteeinheit 3 zugeführt, die eine Helligkeitsverteilung der Aufnahme ermittelt. Eine solche Helligkeitsverteilung ist schematisch in Fig. 2 dargestellt, wobei entlang der x-Achse die Helligkeitswerte und entlang der y-Achse die Häufigkeit der entsprechenden Helligkeitswerte aufgetragen ist.

Wie aus der Darstellung von Fig. 2 entnommen werden kann, weist die Helligkeitsverteilung 7 einen im wesentlichen stufenförmigen Verlauf auf. Der stufenförmige Verlauf umfaßt einen ersten Bereich 8 mit niedriger Helligkeit und geringer Häufigkeit, der den Text in der Aufnahme entspricht, einen Bereich 9 mit großer Helligkeit und hoher Häufigkeit, der dem Hintergrund der Aufnahme entspricht, sowie einen Übergangsbereich 10 auf, der zwischen den Bereichen 8 und 9 liegt. Es wurde festgestellt, daß bei Texten die Helligkeitsverteilung der Aufnahme im Prinzip immer einen stufenförmigen Verlauf aufweist. Lediglich der Übergangsbereich 10 verschiebt sich entlang der x-Achse in Abhängigkeit der tatsächlichen Beleuchtung zur Zeit der Aufnahme, der Papierfarbe und sonstigen äußeren Einflüssen.

Die Auswerteeinheit 3 kann die ermittelte Helligkeitsverteilung auch einer Tiefpaßfilterung unterziehen, um unerwünschte, hochfrequente Schwankungen herauszufiltern. Bei der in Fig. 2 schematisch dargestellten Verteilung ist angenommen, daß eine Tiefpaßfilterung durchgeführt wurde. Nachdem häufig bei hohen Helligkeitswerten ein Abfall der Häufigkeit vorliegt (wie auch in Fig. 2 dargestellt), ermittelt die Auswerteeinheit 3 zunächst die Helligkeit mit der größten Häufigkeit (hier Punkt P1). Von diesem Punkt wird die Helligkeitsverteilung 7 in Richtung zum Bereich 8 hin analysiert, um den Übergang zwischen den Bereichen 8 und 9 zu ermitteln. Vorteilhaft ist dabei ein Helligkeitswert im Übergangsbereich 10, der möglichst nah am Bereich 8 (also näher am Bereich 8 als am Bereich 9) liegt. Hier wird der Übergangspunkt P2 ermittelt. Der Helligkeitswert P2 wird dann als Helligkeitsschwellwert festgelegt.

Das Auffinden kann beispielsweise derart durchgeführt werden, daß die erste Ableitung der Helligkeitsverteilung 7 gebildet wird und der Helligkeitswert ermittelt wird, an dem die Ableitung einen vorbestimmten Wert aufweist (eine vorbestimmte Steigung). Wenn der Helligkeitsschwellwert anhand der ersten Ableitung des Helligkeitsverlaufs 7 ermittelt wird, wird bevorzugt vor der Bildung der ersten Ableitung der Helligkeitsverlauf 7 normiert, um vergleichbare Werte zu erhalten. Als Steigungswert kann beispielsweise eine Steigung von kleiner als 45% oder kleiner als 10% festgelegt werden. Um den Helligkeitswert P2 ermitteln zu können, kann insbesondere noch die zweite Ableitung des Helligkeitsverlaufs 7 berücksichtigt werden. Damit kann man entweder über das Vorzeichen der zweiten Ableitung sicherstellen, das man sich am Fußbereich der Flanke des Übergangsbereichs 10 (also nahe am Bereich 8) und nicht am oberen Bereich (also nahe am Bereich 9) befindet. Alternativ kann man den Wendepunkt ermitteln (zweite Ableitung ist gleich 0) und von diesem zu kleineren x-Werten hin den Helligkeitswert ermitteln, ab dem die Steigung (erste Ableitung) kleiner als eine vorbestimmte Steigung (45% oder beispielsweise 10%) wird. Mit diesem Vorgehen findet man sicher den Helligkeitsschwellwert P2.

Die Aufnahme der Aufnahmeeinheit 2 sowie der Helligkeitsschwellwert P2 der Auswerteeinheit 3 werden der Bildverarbeitungseinheit 4 zugeführt, die aus der Aufnahme ein Binärbild mit zwei unterschiedlichen, vorbestimmten Helligkeitswerten erzeugt. Dazu ordnet sie den Bildpunkten des zu erzeugenden Binärbildes jeweils den ersten der beiden Helligkeitswerte zu, wenn die Helligkeit des entsprechende Bildpunktes der Aufnahme kleiner ist als der Helligkeitsschwellwert P2. Wenn dies nicht der Fall ist, wird den Bildpunkten der zweite Helligkeitswert zugeordnet. Wenn als erster Helligkeitswert der minimal mögliche Helligkeitswert (also schwarz) und als zweiter Helligkeitswert der maximal mögliche Helligkeitswert (also weiß) festgelegt werden, wird ein Binärbild mit maximalem Kontrast erzeugt. Dieses Binärbild wird der Anzeigeeinheit 5 zugeführt, die es dann z. B. auf einen Bildschirm 11 darstellt, der Teil der Anzeigeeinheit 5 ist.

Das Binärbild und die Aufnahme, aus der das Binärbild erzeugt wird, weisen bevorzugt die gleiche Größe bzw. die gleiche Anzahl von Bildpunkten auf, so daß eine 1:1-Zuordnung zwischen den Bildpunkten vorliegt. Wenn die Aufnahme eine Auflösung von n x m Punkten aufweist, wird somit ein Binärbild mit n x m Bildpunkten erzeugt.

Die Anzeigeeinheit 5 kann beispielsweise einen herkömmlichen Monitor, eine Projektionsvorrichtung oder auch eine HMD-Vorrichtung (Head-Mounted-Display-Vorrichtung) umfassen, die auf den Kopf eines Benutzers getragen wird und die dem Benutzer das Binärbild als virtuelles Bild darbietet.

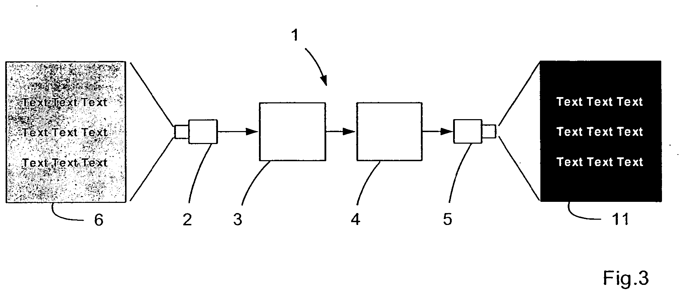

Natürlich ist es auch möglich, daß der erste Helligkeitswert der maximal mögliche Helligkeitswert (hier also weiß) und der zweite Helligkeitswert der minimal mögliche Helligkeitswert (hier also schwarz) ist. In diesem Fall wird eine invertierte Darstellung erzeugt (weiße Schrift auf schwarzem Hintergrund). Dies ist schematisch in Fig. 3 dargestellt.

Die Aufnahmeeinheit 2 kann eine herkömmliche Videokamera oder eine sonstige Kamera sein. Insbesondere kann sie z. B. auch in Form ähnlich einer Computermaus ausgeführt sein, die über den zu lesenden Text geschoben wird.

In einer weiteren Ausführungsform erzeugt die Aufnahmeeinheit 2 laufend neue Aufnahmen. Dies ist z. B. der Fall, wenn die Aufnahmeeinheit 2 ähnlich zu einer Computermaus ausgebildet ist und über den zu lesenden Text geschoben wird. Diese Aufnahmen werden in der beschriebenen Art und Weise jeweils in ein Binärbild umgewandelt und mittels der Anzeigeeinheit 5 dargestellt.

Vorteilhaft leitet die Auswerteeinheit 3 nicht für jede Aufnahme der Aufnahmeeinheit 2 einen Helligkeitsschwellwert ab. Die Auswerteeinheit 3 leitet z. B. nur für jede 10. Aufnahme einen Helligkeitsschwellwert ab, der dann von der Bildverarbeitungseinheit 4 für die nachfolgenden Aufnahmen so lange verwendet wird, bis die Auswerteeinheit 3 einen neuen Schwellwert abgeleitet und der Bildverarbeitungseinheit 4 zugeführt hat. Die Anzahl der Aufnahmen, für die ein ermittelter Helligkeitsschwellwert verwendet wird, kann konstant sein oder variieren. Insbesondere kann die Auswerteeinheit 3 die Helligkeitsverteilung, anhand der die Helligkeitsschwellwert abgeleitet wurde, mit den Helligkeitsverteilungen der nachfolgenden Aufnahmen vergleichen und erst bei einer vorbestimmten Größe der Abweichung einen neuen Helligkeitsschwellwert ermitteln.

Durch diese nicht sehr häufige Berechnung des Helligkeitsschwellwertes kann die notwendige Rechenleistung der Auswerteeinheit 3 verringert werden, was zur Kosten- und Gewichtsreduzierungen führt. Mit diesen Maßnahmen läßt sich leicht eine Echtzeiterzeugung der gewünschten Binärbilder erreichen.

Die Anzeigeeinheit 5 kann das Binärbild bzw. die Binärbilder auch vergrößert darstellen.

## Patentansprüche

1. Elektronische Sehhilfe (1) mit
- einer Auswerteeinheit (3), der eine Aufnahme eines Informationsträgers (6), auf dem eine sich sichtbar vom Hintergrund abhebende Information dargestellt ist, zugeführt ist,
- einer Bildverarbeitungseinheit (4), die aus der Aufnahme ein Binärbild mit nur zwei unterschiedlichen, vorbestimmten Helligkeitswerten erzeugt, und
- einer Anzeigeeinheit (5), die das Binärbild anzeigt und als Head Mounted Display (HMD)-Vorrichtung ausgebildet ist,
**dadurch gekennzeichnet, dass**
die Auswerteeinheit (3) eine Helligkeitsverteilung (7) der Aufnahme ermittelt und aus der Helligkeitsverteilung (7) einen Helligkeitsschwellwert (P2) ableitet, der im Übergangsbereich (10) zwischen einem dem Hintergrund zuzuordnenden Bereich (9) der Helligkeitsverteilung (7) und einem der Information zuzuordnenden Bereich (8) der Helligkeitsverteilung (7) liegt, und
die Bildverarbeitungseinheit (4) den Bildpunkten des Binärbildes jeweils den ersten der beiden Helligkeitswerten zuordnet, wenn die Helligkeit des entsprechenden Bildpunktes der Aufnahme kleiner ist als der Helligkeitsschwellwert (P2), und ansonsten den zweiten Helligkeitswert zuordnet.

2. Elektronische Sehhilfe nach Anspruch 1, bei der die Auswerteeinheit (4) als Helligkeitsverteilung eine Histogramm ermittelt und das Histogramm vor der Ableitung des Schwellwertes einer Tiefpaßfilterung unterzieht.

3. Elektronische Sehhilfe nach einem der obigen Ansprüche, bei der die Auswerteeinheit (4) den Schwellwert (P2) anhand des Steigungsverlaufes der Helligkeitsverteilung (7) ermittelt.

4. Elektronische Sehhilfe nach einem der obigen Ansprüche, bei der die Auswerteeinheit (4) die Helligkeitsverteilung vor der Ableitung des Schwellwertes normiert.

5. Elektronische Sehhilfe nach einem der obigen Ansprüche, der laufend neue Aufnahmen zugeführt werden, wobei die Auswerteeinheit (3) nur für eine Aufnahme einer vorbestimmten Anzahl von aufeinanderfolgenden Aufnahmen den Helligkeitsschwellwert (P2) ableitet und die Bildverarbeitungseinheit (4) den so abgeleiteten Helligkeitsschwellwert (P2) bei der Erzeugung der Binärbilder aus den Ausnahmen der vorbestimmten Anzahl von Aufnahmen einsetzt.

6. Elektronische Sehhilfe nach einem der obigen Ansprüche, die eine Aufnahmeeinheit (2) zum Erzeugen der Aufnahme(n) aufweist.

7. Elektronisches Sehhilfeverfahren, bei dem
- eine Helligkeitsverteilung einer zugeführten Aufnahme eines Informationsträgers, auf dem eine sich sichtbar vom Hintergrund abhebenden Information dargestellt ist, ermittelt wird,
- aus der Aufnahme ein Binärbild mit nur zwei unterschiedlichen, vorbestimmten Helligkeitswerten erzeugt wird, und
- das Binärbild mittels einer Head Mounted Display (HMD)-Vorrichtung angezeigt wird,
**dadurch gekennzeichnet,**
**dass** aus der Helligkeitsverteilung ein Helligkeitsschwellwert abgeleitet wird, der im Übergangsbereich zwischen einem dem Hintergrund zuzuordnenden Bereich der Helligkeitsverteilung und einem der Information zuzuordnenden Bereich der Helligkeitsverteilung liegt, und
**dass** den Bildpunkten des Binärbildes jeweils der erste der beiden Helligkeitswerte zugeordnet wird, wenn die Helligkeit des entsprechenden Bildpunktes der Aufnahme kleiner ist als der Helligkeitsschwellwert, und ansonsten der zweite Helligkeitswert zugeordnet wird.

8. Verfahren nach Anspruch 7, bei dem als Helligkeitsverteilung ein Histogramm ermittelt und das Histogramm vor der Ableitung des Schwellwertes einer Tiefpaßfilterung unterzogen wird.

9. Verfahren nach Anspruch 7 oder 8, bei dem der Schwellwert anhand des Steigungsverlaufs der Helligkeitsverteilung ermittelt wird.

10. Verfahren nach einem der Ansprüche 7 bis 9, bei dem die Helligkeitsverteilung vor der Ableitung des Schwellwertes normiert wird.

11. Verfahren nach einem der Ansprüche 7 bis 10, bei dem von laufend zugeführten Aufnahmen der Helligkeitsschwellwert nur von einer der Aufnahmen einer vorbestimmten Anzahl von aufeinanderfolgenden Aufnahmen abgeleitet wird und für die vorbestimmte Anzahl von aufeinanderfolgenden Aufnahmen der so ermittelte Helligkeitsschwellwert zur Erzeugung der Binärbilder eingesetzt wird.

## Claims

1. An electronic visual aid (1) comprising
- an evaluating unit (3), which is supplied with a recording of an information carrier (6) on which information standing out visibly from the background is displayed,
- an image processing unit (4) which generates from the recording a binary image having only two different, predetermined brightness values, and
- a display unit (5) which displays the binary image and is provided as a head-mounted display (HMD) device,
**characterized in that**
the evaluating unit (3) determines a brightness distribution (7) of the recording and derives a brightness threshold value (P2) from said brightness distribution (7), said threshold value lying in the transition zone (10) between a zone (9) of brightness distribution (7) associated with the background and a zone (8) of brightness distribution (7) associated with the information, and
the image processing unit (4) assigns to the pixels of the binary image the first of both brightness values, if the brightness of the corresponding pixel of the recording is below the brightness threshold value (P2), and otherwise assigns the second brightness value.

2. The electronic visual aid as claimed in claim 1, wherein the evaluating unit (4) determines a histogram as the brightness distribution and subjects said histogram to low-pass filtering before derivation of the threshold value.

3. The electronic visual aid as claimed in any one of the above claims, wherein the evaluating unit (4) determines the threshold value (P2) on the basis of the gradient run of the brightness distribution (7).

4. The electronic visual aid as claimed in any one of the above claims, wherein the evaluating unit (4) standardizes the brightness distribution before deriving the threshold value.

5. The electronic visual aid as claimed in any one of the above claims, which is constantly supplied with new recordings, said evaluating unit (3) deriving the brightness threshold value (P2) for only one of a predetermined number of sequential recordings, and the image processing unit (4) uses the thus derived brightness threshold value (P2) to generate the binary images from the recordings of the predetermined number of recordings.

6. The electronic visual aid as claimed in any one of the above claims, which comprises a recording unit (2) for generating the recording(s).

7. Electronic visual-aid method, wherein
- a brightness distribution is determined of a supplied recording of an information carrier on which information visibly standing out from the background is represented,
- from said recording a binary image is generated having only two different, predetermined brightness values, and
- the binary image is displayed using a head-mounted display (HMD) device,
**characterized in that**
a brightness threshold value is derived from the brightness distribution, said threshold value lying the transition zone between a zone of brightness distribution associated with the background and a zone of brightness distribution associated with the information, and
the pixels of the binary image are respectively assigned to the first of both brightness values, if the brightness of the corresponding pixel of the recording is below the brightness threshold value, and otherwise the second brightness value is assigned.

8. The method as claimed in claim 7, wherein a histogram is determined as the brightness distribution and the histogram is subjected to low-pass filtering before deriving the threshold value.

9. The method as claimed in claim 7 or 8, wherein the threshold value is determined on the basis of the gradient of the brightness distribution.

10. The method as claimed in any one of claims 7 to 9, wherein the brightness distribution is standardized before deriving the threshold value.

11. The method as claimed in any one of claims 7 to 10, which comprises deriving for constantly supplied recordings the brightness threshold value for only one of the recordings of a predetermined number of sequential recordings and using the thus determined brightness threshold value for the predetermined number of sequential recordings so as to generate the binary images.

## Revendications

1. Aide visuelle électronique (1) présentant :
une unité d'évaluation (3) à laquelle est amenée l'enregistrement d'un support d'information (6) sur lequel est présentée une information qui se distingue visiblement de l'arrière-plan,
une unité (4) de traitement d'image qui forme à partir de la réception une image binaire qui présente uniquement deux valeurs différentes et prédéterminées de luminosité et
une unité d'affichage (5) qui affiche l'image binaire et qui est configurée comme ensemble d'affichage tête haute ("HMD - Head Mounted Display"), **caractérisée en ce que**
l'unité d'évaluation (3) détermine une répartition (7) de la luminosité de l'enregistrement et dérive de la répartition (7) de luminosité une valeur de seuil (P2) de la luminosité située dans la zone de transition (10) entre une partie (9) de la répartition (7) de luminosité qui doit être associée à l'arrière-plan et une partie (8) de la répartition (7) de la luminosité qui doit être associée à l'information,
**en ce que** l'unité (4) de traitement d'image associe à chacun des points de l'image binaire la première des deux valeurs de luminosité si la luminosité du point d'image correspondant de l'enregistrement est inférieure à la valeur de seuil (P2) de la luminosité, et sinon l'associe à la deuxième valeur de luminosité.

2. Aide visuelle électronique selon la revendication 1, dans laquelle l'unité d'évaluation (4) détermine comme répartition de la luminosité un histogramme et fait subir à l'histogramme un filtrage passe-bas avant de dériver la valeur de seuil.

3. Aide visuelle électronique selon l'une des revendications précédentes, dans laquelle l'unité d'évaluation (4) détermine la valeur de seuil (P2) à l'aide de l'évolution de la pente de la répartition (7) de la luminosité.

4. Aide visuelle électronique selon l'une des revendications précédentes, dans laquelle l'unité d'évaluation (4) norme la répartition de luminosité avant d'en dériver la valeur de seuil.

5. Aide visuelle électronique selon l'une des revendications précédentes, à laquelle de nouveaux enregistrements sont apportés en permanence, l'unité d'évaluation (3) ne dérivant la valeur de seuil (P2) de la luminosité que pour un enregistrement parmi un nombre prédéterminé d'enregistrements successifs, l'unité (4) de traitement d'image introduisant la valeur de seuil (P2) de la luminosité ainsi dérivée lors de la formation des images binaires parmi les enregistrements faisant partie du nombre prédéterminé d'enregistrements.

6. Aide visuelle électronique selon l'une des revendications précédentes, qui présente une unité d'enregistrement (2) qui forme le ou les enregistrements.

7. Procédé d'aide électronique à la vision, dans lequel
une répartition de la luminosité d'un enregistrement d'un support d'information sur lequel une information qui se distingue visiblement de l'arrière-plan est présentée est déterminée,
à partir de l'enregistrement, une image binaire qui contient uniquement deux valeurs différentes est prédéterminée de la luminosité est formée et
l'image binaire est affichée au moyen d'un ensemble d'affichage tête haute (HMD),
**caractérisé en ce que**
à partir de la répartition de luminosité, une valeur de seuil de luminosité est dérivée qui est située dans la zone de transition entre une partie de la répartition de luminosité qui doit être associée à l'arrière-plan et une partie de la répartition de la luminosité qui doit être associée à l'information et
**en ce que** la première des deux valeurs de luminosité est associée au point de l'image binaire si la luminosité du point d'image correspondant dans l'enregistrement est inférieure à la valeur de seuil de luminosité, sinon, c'est la deuxième valeur de luminosité qui est associée.

8. Procédé selon la revendication 7, dans lequel la répartition de la luminosité déterminée est un histogramme et l'histogramme subit un filtrage passe-bas avant que la valeur de seuil soit dérivée.

9. Procédé selon les revendications 7 ou 8, dans lequel la valeur de seuil (P2) est déterminée à l'aide de l'évolution de la pente de la répartition (7) de la luminosité.

10. Procédé selon l'une des revendications 7 à 9, dans lequel la répartition de luminosité est normée avant que la valeur de seuil soit dérivée.

11. Procédé selon l'une des revendications 7 à 10, dans lequel la valeur de seuil (P2) de la luminosité n'est déterminée que pour un enregistrement parmi un nombre prédéterminé d'enregistrements successifs, la valeur de seuil (P2) de la luminosité ainsi déterminée pour les enregistrements faisant partie du nombre prédéterminé d'enregistrements étant utilisée pour former les images binaires.
